# EUROPEAN PATENT SPECIFICATION

(11) **EP 3 018 080 B1**
(45) Date of publication and mention of the grant of the patent: **08.02.2023**
(21) Application number: 15193824.8
(22) Date of filing: 10.11.2015
(51) Int. Cl.: B65G 1/137, G06Q 10/08

(54) **HANDLING SYSTEM FOR DEPOSITING AND PICKING NON-HOMOGENEOUS ARTICLES IN A WAREHOUSE**
HANDHABUNGSSYSTEM ZUM ABLEGEN UND AUFNEHMEN NICHTHOMOGENER ARTIKEL IN EINEM LAGER
SYSTÈME DE MANIPULATION PERMETTANT DE DÉPOSER ET DE PRÉLEVER DES ARTICLES NON HOMOGÈNES DANS UN ENTREPÔT

(30) Priority: 10.11.2014 IT TO20140933
(43) Date of publication of application: 11.05.2016
(73) Proprietor: ELDECO S.r.l., 10134 Torino (IT)
(72) Inventor: BRIZZO, Giuseppe, I-10024 MONCALIERI (Torino) (IT)
(74) Representative: Deambrogi, Edgardo

(56) References cited:
- EP-A1- 2 554 496
- WO-A1-2006/098943
- WO-A2-02/17537
- FR-A1- 2 782 703
- JP-A- 2000 306 062
- US-A1- 2005 149 226
- US-A1- 2009 251 319
- US-A1- 2013 312 371
- US-B1- 8 423 431

## Description

The present invention relates in general to logistics and in particular to a warehouse management system. More specifically, it relates to a management system for depositing and picking non-homogeneous articles in a warehouse comprising a plurality of locations for storing the articles.

Various different systems and methods are known for managing the depositing and picking of non-homogeneous articles in a warehouse, in particular for warehouses that cover a large surface area, for example warehouses having dynamic shelving with multiple accumulation depth, in which the articles are stored in predetermined locations, for example sorted by goods category.

Manual product depositing and picking systems developed to optimize logistical processes, in particular the management of goods streams in a warehouse, for example for order preparation activities, use an electronic infrastructure to coordinate and manage product picking and depositing activities, in which each pick or deposit location is provided with display means designed to provide operators with information on the picking or depositing operations to be carried out (typically to inform the operator of the location, nature and number of articles to be picked or the location and nature of the article to be deposited, recording the increase in the number of products deposited).

In general, similar products are deposited in the same location, and each location is provided with signalling means, such as a light emitter, and control means, such as a push button.

Operators are guided around the warehouse to the locations where the products are to be deposited or picked using light emitters that are illuminated in a predetermined optimum sequence to indicate the locations containing the products to be managed (picked, deposited) in a predetermined order, without requiring the operator to carry a list of the objects to be picked or to responsibly select the optimal route. The luminous signals are activated by the operator himself or by an operating centre as a function of an identification code of the article to be handled. The signalling means may be controlled to optimize the product picking or depositing route through the warehouse.

Metering means may also be provided for each location to keep a record of the number of articles in the warehouse, said means being designed to increase or decrease the recorded number as a function of the depositing and picking operations.

Thanks to such a system the code of an order for which products need to be picked is acquired, for example by reading barcodes, by a management centre for the warehouse connected to signalling means associated with all of the storage locations in the warehouse, and the aforementioned management centre controls the illumination of the luminous signalling means corresponding to the locations of the articles to be picked. In each storage location, if the related display means are associated with multiple storage cells, they may also indicate the cell relating to the article to be handled. Once the article has been picked, the operator can confirm completion of the operation, for example by pressing the control button, and then quickly visually identify the next picking location.

Such "pick-to-light" and "put-to-light" systems provide "operator-to-goods" solutions for picking and depositing articles in a warehouse, which ensure particularly good productivity, around 500-600 picks per hour.

However, since these systems depend upon a prior classification of the related goods category and upon the storage in a corresponding location of similar products only, they do not enable articles that are more frequently used to be distinguished from articles that are less frequently moved, neither do they allow the storage of products randomly.

For these reasons, disadvantageously, operators may be required to travel large distances within the warehouse to find a predetermined location to deposit or pick articles that are more frequently moved than other articles that have been assigned a closer location.

In other words, the warehouse storage locations may not be occupied progressively, but their occupation depends exclusively on a fixed allocation made when the warehouse is being designed, which is difficult and time-consuming to modify.

WO 02/17537 describes a management system for a warehouse and a method for managing picking orders from a warehouse in which the location of the stored products is determined by a radio frequency system that includes a scanner used by an operator to locate a product using a database containing information on the availability and location of the stored products, and to send an acoustic warning in the vicinity of the selected product based on communication with a related identification label.

WO 2006/098943 relates to a method and an apparatus for selecting and arranging articles in a collection station fitted with a plurality of containers associated with different article delivery destinations. There are luminous indicators corresponding to each container and they are activated after a product is picked from the warehouse to indicate the related destination container to an operator.

FR 2 782 703 A1 discloses a management system for storing and retrieving objects comprising a plurality of electronic labels, including each an encoded electronic circuit having an internal code and a source of energy. The system further comprises an emitting means for signalling the plurality of labels and a control unit for managing the emission of signals according to inputs made by a user. Codes of the labels are associated in an allocation table with reference of the objects. EP 2 554 496 A1 discloses a picking management system for a warehouse involving a portable apparatus, articles having RFID transponders and a central control system.

US 2005/149226 discloses a warehousing system including a container for storing at least one item, an electronic (e.g. radio frequency identification (RFID) module associated with the container, and a controller which wirelessly communicates with the electronic module, for directing a transfer of said at least one item to and/or from said container. US 2005/149226 discloses a management system for depositing and picking non-homogeneous articles in a warehouse according to the preamble of claim 1.

The present invention is intended to provide a satisfactory solution to the problem set out above, overcoming the drawbacks in the prior art.

In particular, one purpose of the present invention is to provide a system for managing the depositing and picking of articles that optimizes said depositing and picking operations.

A more specific object of the invention is to provide a system for managing the depositing and picking of articles that enables the random storage of articles, in which the locations in the warehouse are not rigidly associated with a predetermined category of products, for example to a related goods category.

A further object of the present invention is to provide a system for managing the depositing and picking of articles in a warehouse that enables an improvement in the number of the depositing and picking operations undertaken by an operator over time, without compromising the simplicity, speed or accuracy of such activities.

According to the present invention, these objects are achieved using a system for managing the depositing and picking of non-homogeneous articles in a warehouse with the features claimed in Claim 1.

Specific embodiments are covered by the dependent claims, the content of which should be understood to be an integral part of the present description.

In summary, the present invention is based on the principle of associating a tag with each article or pack of articles, the latter including packs of articles that are similar or related, for example by virtue of the intended use of same, which are treated as a single element during warehouse depositing and picking operations. Unlike the prior art, the present invention does not have a management infrastructure in which the tags are associated to product locations, but not to the products themselves.

Additional features and advantages of the invention are set out in greater detail in the description provided below of one embodiment of the invention given by way of a nonlimiting example with reference to the attached drawings, in which:

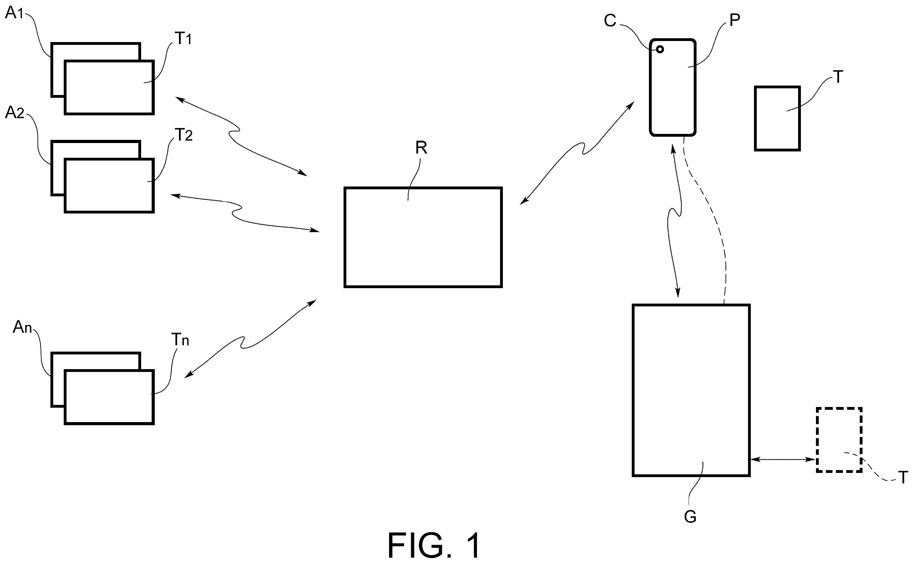

Figure 1 is a schematic view of a system for managing the depositing and picking of articles in a warehouse according to the teachings of the present invention,
Figures 2a and 2b show examples of two models of tag used in the system in Claim 1, and
Figure 3 shows a warehouse in which a system according to Claim 1 is implemented.

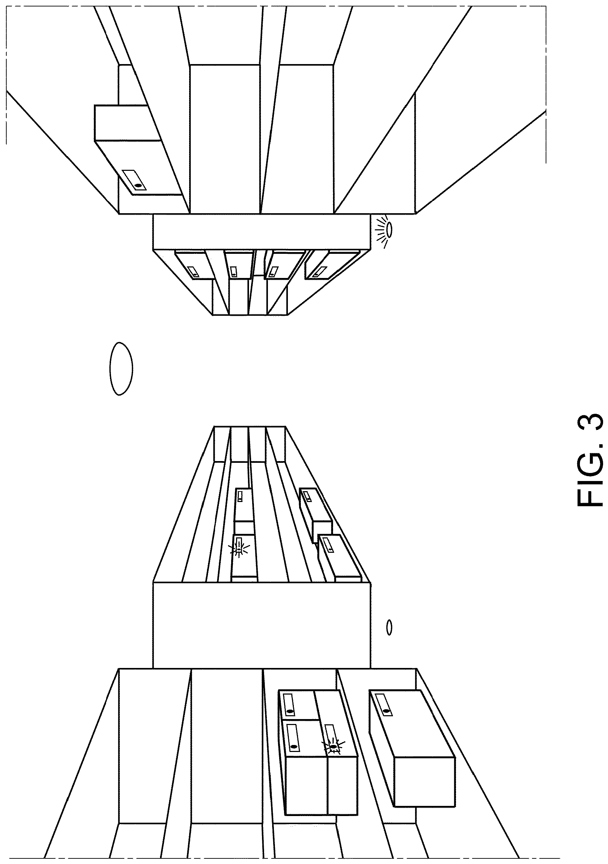

In the figures, the reference sign T1-Tn indicates a plurality of tags temporarily or permanently associated with a respective warehouse article A (A1-An). In Figure 3, this warehouse article is shown in the form of a box-shaped pack, but this representation should be understood to be a nonlimiting example of the type of article with which a tag can be associated. A tag can also be associated with an individual article contained in a pack, in which case the pack can advantageously be associated in turn with a similar tag.

Each tag T1-Tn includes radio frequency transceiver means, for example 868 MHz RFID, adapted to provide two-way communication with a central transceiver station indicated using reference sign R in the figure, for example by means of an integrated antenna. Advantageously, active tags operating at frequencies other than those covered by the ISO standard for passive systems support operation without conflicting with other tags in neighbouring systems. Conveniently, each tag is powered by replaceable or rechargeable batteries W and fitted with means for signalling its own presence, for example at least either luminous signalling means L or acoustic signalling means S.

Each tag T1-Tn is provided with a unique tag identification code that is stored electronically in a non-volatile memory carrier M that is accessible using a known radio polling method. This code may also be represented on the outside of the tag using identification indicia such as a one-dimensional or two-dimensional barcode (QR code) B or a similar printed cryptogram, which can be captured by optical capture means such as a camera or similar.

A tag may take different forms, also as a function of the intended use of same.

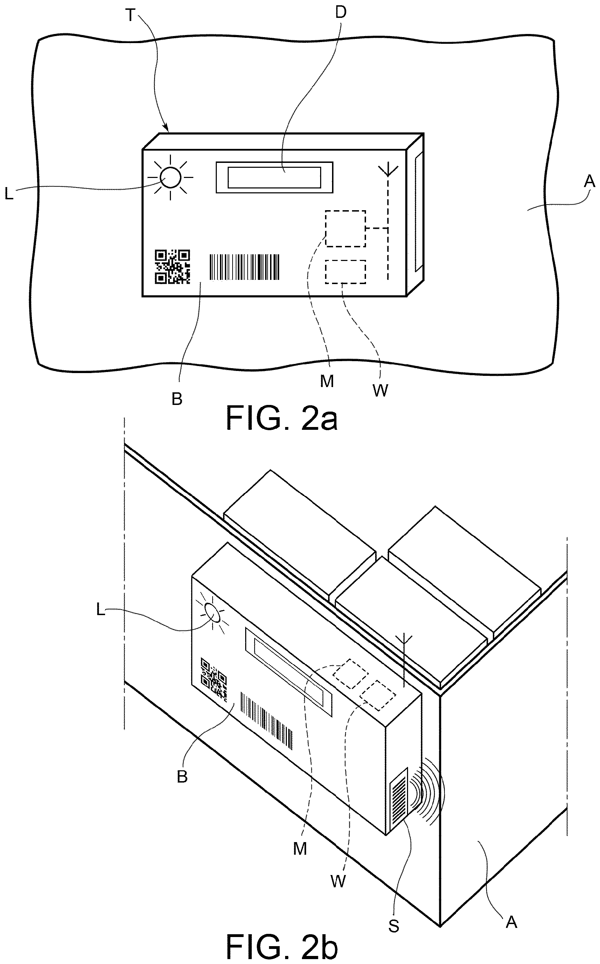

Figure 2a shows, by way of example, a flat tag, that is for example rectangular, the sides of which may be a few centimetres long and the thickness of which is around one centimetre, thereby enabling it to contain a replaceable lithium battery that is for example accessible through a cover located on one side or on one face of the tag.

Luminous signalling means L, such as an LED or indicator lamp, that are visible to a passing operator are positioned on the front face of the tag.

Advantageously, the front face of the tag may also be provided with means D for holding an identification plate used to show instructions and information legible by the operator. The rear face of the tag may be provided with adhesive means or mechanical fastening means for stably but removably attaching the tag to an article or an article pack.

Figure 2b shows a voluminous tag, for example a tag having a parallelepiped-shaped container body, the sides of which may be several centimetres long and the thickness of which enables same to contain a rechargeable battery, for example a lead battery, that is accessible through a cover on one face of the tag or through a charging connector. Such a tag is designed to be associated with large packages, and in the figure is shown associated with a product pack.

Luminous signalling means L, such as an LED or indicator lamp, that are visible to a passing operator are positioned on the front face of the tag. The tag is also fitted with acoustic signalling means S, for example an acoustic diffuser, adapted to emit a sound audible to a passing operator.

Similarly to the flat tag, also the voluminous tag may advantageously include means D on the front face for holding an identification plate used to show instructions and information legible by the operator. The rear face of the tag may be provided with adhesive means or mechanical fastening means for stably but removably attaching the tag to an article or an article pack, or to a pack of a plurality of articles (package).

In addition, a tag or a central addressing station as described may also be used (as repeaters) to identify specific storage or article-movement areas within the warehouse, such as aisles or other routes useable by operators, or guided pathways in the warehouse area, as well as they may be associated with article movement means. For example, a tag may be used to externally identify at the front a moveable shelf in a set of stackable moveable shelves in order to show an operator the shelf sliding operations required to reach the product requested, which is in turn identified by its own tag, or to identify a product sorting trolley containing, for example temporarily, a frequently used product or a product to be occasionally brought to production islands manned by a static operator.

A central transceiver station R is designed to poll via radio the tags associated with the articles stored in a related warehouse area, the dimensions of which are compatible with the range of the radio signal emitted by the station. The link between the central station R and the tags is preferably bi-directional, such bi-directional link enabling the tags to inform the central station of the state of charge of its batteries and other functions and anomalies relating to the tag.

In relatively large warehouses, a plurality of central stations may be used, each being associated with an area of the warehouse.

Reference sign P indicates a portable management device used by an operator, adapted to establish a communication link with one or more central stations R, for example using an ordinary Wi-Fi radio communication protocol.

The portable management device P is preferably a proprietary electronic digital assistant device designed to manage product movement operations within a warehouse, or an ordinary electronic mobile communication device, such as a smartphone or a tablet, running a dedicated management application adapted to provide a user interface for entering and consulting data relating to product movement orders in a warehouse. Usefully, the functions of the portable management device P may be used in full by providing a management application adapted to provide a user interface for consulting information relating to the product being picked, such as the technical features of same, or the expiry date of same in the case of perishable products, thereby helping the operator to identify, among similar products, a preferable picking time order.

Advantageously, the portable management device P is also provided with capture means C, such as an ordinary camera, adapted to read images of identification indicia of the tags, such as one-dimensional or two-dimensional barcodes (QR code) B or a similar printed cryptograms.

According to the invention, when depositing an article A in the warehouse, the portable management device P is designed to associate a tag identification code belonging to a free tag, i.e. a tag not yet associated with an article, to a respective identification code of the article, for example a product identification code allocated by a remote warehouse management system G, which is in wireless or wired communication with the portable device (in the latter case, only at specific data-exchange times) to enable retrieval of work orders, bills of materials, picking orders or anything else related to goods management. For example, the identification code of the tag associated with an article may be represented by identification indicia, such as a one-dimensional or two-dimensional barcode (QR code) B that is printed on the surface of the tag and that can be read using the capture means C of the portable management device.

According to the invention, when picking an article A, the portable device P acquires from the user at least one identification code of the article to be picked from the warehouse, for example by manual entry by the user or by communication with the order management system G, and sends an article search request along with the tag identification code associated with the article, determined using a look-up table, to said at least one central station R.

A look-up table T temporarily matching the tag identification codes with the identification codes of the article can be stored in the portable management device P or in the warehouse management system G.

According to the invention, when the portable management device P makes a code-search request to the central station R, the central station begins polling the tags in the area of the warehouse within the radio coverage area of said station. When the identified tag receives the polling signal, the tag presence signalling means are activated, i.e. the luminous and/or acoustic signalling means associated therewith, which enables the operator to find said tag, and therefore the article (or articles) associated therewith, quickly and precisely.

Advantageously, the signal timing, i.e. the signal trigger time after polling and the duration of same, and the signalling method can be configured in the portable management device P and sent by same to the tag via the central transceiver station R.

This helps an operator to find articles stored in different, remote locations in the warehouse sequentially. Similarly, the system according to the invention also optimizes the management of warehouses organized into production islands in which mobile stores are commanded to move to a static operator.

The portable management device P is adapted to communicate, periodically or in response to an event, with the warehouse management system G, for example to record an increase or a decrease of the number of articles each time a picking or depositing operation is completed. The portable management device P can be used to update the number of remaining articles in the warehouse management system G and to send an automatic order to supply an out-of-stock article using a dedicated management application.

Advantageously, the system according to the invention enables objects to be allocated freely to the available locations in a warehouse, for example in the quickest-to-reach locations, thereby enabling the space to be used horizontally and vertically (unlimited stacking of containers) without having to previously allocate areas or spatial coordinates to specific goods categories of products. Goods can be positioned freely both for the first allocation of same, and for subsequent allocations after a product has been picked. This optimizes the use of space in the warehouse by enabling different products to be stacked, said products being nonetheless individually identifiable.

Tags can be reused, once the related article has been picked or once the similar articles in a same related pack have all been used up, by simply removing said tag from the picked article and attributing same to another article to be deposited in the warehouse, by means of a new configuration phase carried out by an operator using the portable management device P.

Naturally, notwithstanding the principle of the invention, the embodiments and the implementation details may be varied significantly from the description and illustrations provided purely by way of non-limiting example, without thereby moving outside the scope of protection of the invention as defined in the attached claims.

## Claims

1. Management system for depositing and picking non-homogeneous articles (A) in a warehouse comprising a plurality of locations for storing the articles (A),
said system comprising:
- a plurality of tags (T1-Tn) that can be associated with respective articles (A), each of which stores a respective tag identification code, each tag comprising radio frequency transceiver means and signalling means (L, S) of its presence that enable an operator to find said tag;
- at least one central transceiver station (R) adapted to establish a radiofrequency communication link with the tags (T1-Tn) in order to poll the tags (T1-Tn) associated with the articles (A) that are present in a storage area of the warehouse; and
**characterised in that** said system further comprises:
- at least one portable management device (P) that can be used by an operator, adapted to establish a communication link with said central station (R),
wherein the portable management device (P) is arranged for:
(a) in an article-depositing phase:
- associating a tag identification code belonging to a free tag not yet associated with an article to a respective identification code of an article (A), and
(b) in an article-picking phase:
- acquiring from a user or remote warehouse management system (G) at least one identification code of the article (A) to be picked in the warehouse, and
- transmitting, to said at least one central station (R), a search request for the article (A) comprising the tag identification code associated with the article (A), the tag identification code being acquired from a temporary look-up table (T) matching the tag identification codes to the article identification codes,
and **in that**:
the central transceiver station (R) is adapted to poll the tags (T1-Tn) in the storage area of the warehouse within a radio coverage area of said station when the portable management device P makes a search request to the central transceiver station (R), and
said presence signalling means (L, S) of the tag are adapted to be activated when the tag having the tag identification code associated with the article (A) receives a polling signal.

2. System according to Claim 1, **characterized in that** said look-up table is stored in the portable management device (P) or in a remote warehouse management system (G).

3. System according to Claim 1 or 2, **characterized in that** said tags (T1-Tn) are radio frequency identification labels.

4. System according to any one of the preceding claims, **characterized in that** said tag presence signalling means include luminous signalling means (L).

5. System according to any one of the preceding claims, **characterized in that** said tag presence signalling means include acoustic signalling means (S).

6. System according to any one of the preceding claims, **characterized in that** said tags (T1-Tn) include visible identification indicia (B) that can be acquired by optical capture means (C).

7. System according to Claim 6, **characterized in that** said visible identification indicia include a one-dimensional or two-dimensional barcode (B).

8. System according to any one of the preceding claims, **characterized in that** said tags (T1-Tn) include adhesive means or fastening means for the stable, removable coupling of the tag to an article (A) or to a pack of one or more articles (A).

9. System according to any one of the preceding claims, **characterized in that** the portable management device (P) is arranged for communicating with a remote warehouse management system (G) to record increases or decreases in the number of articles (A) each time an article (A) is deposited or picked.

10. System according to any one of the preceding claims, **characterized in that** said tags (T1-Tn) can be associated with an article storage area, to a path in the warehouse or to article movement means.

## Patentansprüche

1. Verwaltungssystem zum Ablegen und Aufnehmen nichthomogener Artikel (A) in einem Lager mit einer Mehrzahl von Orten zum Aufbewahren der Artikel (A), mit:
- einer Mehrzahl von Anhängern (T1-Tn), die mit jeweiligen Artikeln (A) assoziiert werden können, von denen jeder einen jeweiligen Anhängeridentifikationscode speichert, jeder Anhänger ein Funkfrequenzsendeempfängermittel und ein Signalisierungsmittel (L, S) seines Vorliegens, das einem Bediener ermöglicht, den Anhänger zu finden, aufweist;
- mindestens einer zentralen Sendeempfängerstation (R), die dazu angepasst ist, zum Abfragen der Anhänger (T1-Tn), die mit den Artikeln (A) assoziiert sind, die in einem Aufbewahrungsbereich des Lagers vorliegen, eine Funkfrequenzkommunikationsverbindung mit den Anhängern (T1-Tn) herzustellen; und **dadurch gekennzeichnet, dass** das System ferner aufweist:
- mindestens eine tragbare Verwaltungsvorrichtung (P), die durch einen Bediener benutzt werden kann, die dazu angepasst ist, eine Kommunikationsverbindung mit der zentralen Station (R) herzustellen,
bei dem die tragbare Verwaltungsvorrichtung (P) angeordnet ist zum:
(a) in einer Artikelablagephase:
- Assoziieren eines Anhängeridentifikationscodes, der zu einem freien Anhänger gehört, der noch nicht mit einem Artikel assoziiert ist, mit einem jeweiligen Identifikationscode eines Artikels (A), und
(b) in einer Artikelaufnahmephase:
- Beschaffen mindestens eines Identifikationscodes des Artikels (A), der in dem Lager aufzunehmen ist, von einem Benutzer oder Lagerfernverwaltungssystem (G), und
- Senden einer Suchanfrage nach dem Artikel (A), der den Anhängeridentifikationscode aufweist, der mit dem Artikel (A) assoziiert ist, an die mindestens eine zentrale Station (R), bei dem der Anhängeridentifikationscode aus einer temporären Nachschlagtabelle (T), die die Anhängeridentifikationscodes den Artikelidentifikationscodes zuordnet, beschafft wird, und dadurch, dass:
die zentrale Sendeempfängerstation (R) so eingerichtet ist, dass sie die Anhänger (T1-Tn) in dem Aufbewahrungsbereich des Lagers innerhalb des Funkabdeckungsbereich der Station abfragt, wenn die tragbare Verwaltungsvorrichtung P eine Suchanfrage an die zentrale Sendeempfängerstation (R) vornimmt, und
das Anhängervorliegesignalisierungsmittel (L, S) dazu angepasst ist, dass sie aktiviert wird, wenn der Anhänger mit dem Anhängeridentifikationscode, der dem Artikel (A) assoziiert ist, ein Abfragesignal empfängt.

2. System nach Anspruch 1, **dadurch gekennzeichnet, dass** die Nachschlagtabelle in der tragbaren Verwaltungsvorrichtung (P) oder in einem Lagerfernverwaltungssystem (G) gespeichert ist.

3. System nach Anspruch 1 oder 2, **dadurch gekennzeichnet, dass** die Anhänger (T1-Tn) Funkfrequenzidentifikationsetiketten sind.

4. System nach einem der vorhergehenden Ansprüche, **dadurch gekennzeichnet, dass** das Anhängervorliegesignalisierungsmittel ein leuchtendes Signalisierungsmittel (L) umfasst.

5. System nach einem der vorhergehenden Ansprüche, **dadurch gekennzeichnet, dass** das Anhängervorliegesignalisierungsmittel ein akustisches Signalisierungsmittel (S) umfasst.

6. System nach einem der vorhergehenden Ansprüche, **dadurch gekennzeichnet, dass** die Anhänger (T1-Tn) sichtbare Identifikationszeichen (B), die durch ein optisches Erfassungsmittel (C) beschafft werden können, umfassen.

7. System nach Anspruch 6, **dadurch gekennzeichnet, dass** die sichtbaren Identifikationszeichen einen eindimensionalen oder zweidimensionalen Strichcode (B) umfassen.

8. System nach einem der vorhergehenden Ansprüche, **dadurch gekennzeichnet, dass** die Anhänger (T1-Tn) ein Haftmittel oder Befestigungsmittel für das stabile, entfernbare Koppeln des Anhängers an einem Artikel (A) oder einer Packung eines oder mehrerer Artikel (A) umfassen.

9. System nach einem der vorhergehenden Ansprüche, **dadurch gekennzeichnet, dass** die tragbare Verwaltungsvorrichtung (P) zum Kommunizieren mit einem Lagerfernverwaltungssystem (G) zum Aufzeichnen von Zunahmen oder Abnahmen bei der Anzahl von Artikeln (A) jedes Mal, wenn ein Artikel (A) abgelegt oder aufgenommen wird, angeordnet ist.

10. System nach einem der vorhergehenden Ansprüche, **dadurch gekennzeichnet, dass** die Anhänger (T1-Tn) mit einem Artikelaufbewahrungsbereich, einem Weg in dem Lager oder einem Artikelbewegungsmittel assoziiert werden können.

## Revendications

1. Système de gestion permettant de déposer et de prélever des articles (A) non homogènes dans un entrepôt comprenant une pluralité d'emplacements permettant de stocker les articles (A),
ledit système comprenant :
- une pluralité d'étiquettes (T1 à Tn) qui peuvent être associées à des articles (A) respectifs, dont chacun stocke un code d'identification d'étiquette respectif, chaque étiquette comprenant des moyens émetteurs-récepteurs radiofréquence et des moyens de signalisation (L, S) de sa présence qui permettent à un opérateur de trouver ladite étiquette ;
- au moins une station émettrice-réceptrice centrale (R) adaptée pour établir une liaison de communication radiofréquence avec les étiquettes (T1 à Tn) afin d'interroger les étiquettes (T1 à Tn) associées aux articles (A) qui sont présents dans une zone de stockage de l'entrepôt ; et
**caractérisé en ce que** ledit système comprend en outre :
- au moins un dispositif de gestion portable (P) qui peut être utilisé par un opérateur, adapté pour établir une liaison de communication avec ladite station centrale (R),
dans lequel le dispositif de gestion portable (P) est agencé pour :
(a) dans une phase de dépôt d'article :
- associer un code d'identification d'étiquette appartenant à une étiquette libre qui n'est pas encore associée à un article, à un code d'identification respectif d'un article (A), et
(b) dans une phase de prélèvement d'articles :
- acquérir auprès d'un utilisateur ou d'un système de gestion d'entrepôt à distance (G) au moins un code d'identification de l'article (A) à prélever dans l'entrepôt, et
- transmettre, à ladite au moins une station centrale (R), une requête de recherche de l'article (A) comprenant le code d'identification d'étiquette associé à l'article (A), le code d'identification d'étiquette étant acquis à partir d'une table de consultation (T) temporaire faisant concorder les codes d'identification d'étiquette aux codes d'identification d'article,
et **en ce que** :
la station émettrice-réceptrice centrale (R) est agencée pour interroger les étiquettes (T1-Tn) dans la zone de stockage de l'entrepôt au sein d'une zone de couverture radio de ladite station lorsque le dispositif de gestion portable (P) réalise une requête de recherche auprès de la station émettrice-réceptrice centrale (R), et
lesdits moyens de signalisation de présence (L, S) de l'étiquette sont adaptés pour être activés lorsque l'étiquette ayant le code d'identification d'étiquette associé à l'article (A) reçoit un signal d'interrogation.

2. Système selon la revendication 1, **caractérisé en ce que** ladite table de consultation est stockée dans le dispositif de gestion portable (P) ou dans un système de gestion d'entrepôt à distance (G).

3. Système selon la revendication 1 ou 2, **caractérisé en ce que** lesdites étiquettes (T1 à Tn) sont des étiquettes d'identification par radiofréquence.

4. Système selon l'une quelconque des revendications précédentes, **caractérisé en ce que** lesdits moyens de signalisation de présence d'étiquette incluent des moyens de signalisation lumineuse (L).

5. Système selon l'une quelconque des revendications précédentes, **caractérisé en ce que** lesdits moyens de signalisation de présence d'étiquette incluent des moyens de signalisation acoustique (S).

6. Système selon l'une quelconque des revendications précédentes, **caractérisé en ce que** lesdites étiquettes (T1 à Tn) incluent des inscriptions d'identification visibles (B) qui peuvent être acquises par des moyens de capture optique (C).

7. Système selon la revendication 6, **caractérisé en ce que** lesdites inscriptions d'identification visibles incluent un code-barres (B) unidimensionnel ou bidimensionnel.

8. Système selon l'une quelconque des revendications précédentes, **caractérisé en ce que** lesdites étiquettes (T1 à Tn) incluent des moyens adhésifs ou des moyens de fixation pour le couplage stable et amovible de l'étiquette à un article (A) ou à un paquet d'un ou de plusieurs articles (A).

9. Système selon l'une quelconque des revendications précédentes, **caractérisé en ce que** le dispositif de gestion portable (P) est agencé pour communiquer avec un système de gestion d'entrepôt à distance (G) afin d'enregistrer des augmentations ou des diminutions du nombre d'articles (A) à chaque fois qu'un article (A) est déposé ou prélevé.

10. Système selon l'une quelconque des revendications précédentes, **caractérisé en ce que** lesdites étiquettes (T1 à Tn) peuvent être associées à une zone de stockage d'articles, à un trajet dans l'entrepôt ou à des moyens de déplacement d'articles.
